# EUROPÄISCHE PATENTSCHRIFT

(11) **EP 1 999 059 B1**
(45) Veröffentlichungstag und Bekanntmachung des Hinweises auf die Patenterteilung: **13.08.2014**
(21) Anmeldenummer: 07723175.1
(22) Anmeldetag: 12.03.2007
(51) Int. Cl.: B65G 47/84, B29C 49/42, B67C 3/24, B67C 7/00

(54) **VERFAHREN UND VORRICHTUNG ZUM TRANSPORTIEREN VON BEHÄLTERN**
METHOD AND DEVICE FOR TRANSPORTING CONTAINERS
PROCÉDÉ ET DISPOSITIF DE TRANSPORT DE RÉCIPIENTS

(30) Priorität: 14.03.2006 DE 102006012020
(43) Veröffentlichungstag der Anmeldung: 10.12.2008
(60) Teilanmeldung: 13168319.5
(73) Patentinhaber: KRONES Aktiengesellschaft, 93073 Neutraubling (DE)
(72) Erfinder: STOIBER, Christian, 93185 Michelsneukirchen (DE); SCHMITT, Robert, 84069 Schierling (DE)
(74) Vertreter: Hannke, Christian
(86) Internationale Anmeldenummer: PCT/EP2007/002125
(87) Internationale Veröffentlichungsnummer: WO 2007/104503

(56) Entgegenhaltungen:
- AT-U1- 520
- US-A1- 2002 167 185

## Beschreibung

Die Erfindung betrifft eine Klammer zum Halten von Behältern nach dem Oberbegriff von Anspruch 1, ein Verfahren zum Transportieren von Behältern, die in einem Mündungsbereich eine Wulst aufweisen, nach dem Oberbegriff des Anspruchs 13 sowie eine Vorrichtung zum Transportieren von Behältern nach dem Oberbegriff des Anspruchs 14. Die Schrift US 2002/0 167 185 A1 offenbart eine Klammer bzw. ein Verfahren gemäß dem Oberbegriff des Anspruchs 1 bzw. 13.

Im Bereich der Lebensmittelverpackungen erfreuen sich Flaschen aus PET (Polyethylenterephthalat) immer größerer Beliebtheit. Diese Behälter werden bei ihrer Herstellung aus Vorformlingen (Preforms) hergestellt. Preforms durchlaufen während ihrer Herstellung verschiedene Behandlungsmaschinen, die jeweils verschiedene Prozesse an ihnen durchführen. Um sie optimal handhaben zu können, weisen sie eine Wulst (den Tragring) auf, an deren Ober- bzw. Unterseite sie während des Durchlaufs durch verschiedene Behandlungsstationen gehalten werden. Auch bei dem Transport zwischen den Behandlungsstationen werden die Vorformlinge über oder unter der Wulst gehalten und übergeben. Es findet also oft ein im Wesentlichen bodenfreier Transport der Vorformlinge durch die Behandlungsmaschinen und den zwischengeschalteten Transport- und Übergabeeinrichtungen statt. Werden Behälter übergeben, so können sie jeweils nur wechselweise oben und unten.an der Wulst ergriffen werden.

Die Schrift DE 37 13 016 A1 zeigt dabei so ein wechselweises Greifen von Kunststoffflaschen oben bzw. unten am Tragring. Die Flaschen werden während des gesamten Transports durch verschiedene Maschinen, Drehstationen und Übergabebereiche praktisch bodenfrei am Halskragen unterstützt bzw. geführt.

Ein Problem bei solchen Transport- und Übergabeverfahren bzw. Vorrichtungen ist es, dass nie zwei Handhabungsmittel hintereinander geschaltet werden können, die die Behälter jeweils an der gleichen Seite des Tragrings ergreifen. So ist es z.B. nicht möglich, einen Transferstern, der auf Grund der Übergabe von vorgeschalteten Maschinen oder Vorrichtungen den Behälter an der Unterseite des Tragrings ergreift, vor einen Luftförderer zu schalten, der seinerseits die Behälter ebenfalls unterhalb des Tragrings hält. In solchen Fällen müssen deshalb oft Zusatzeinrichtungen, wie weitere Transfersterne zwischengeschaltet werden, um vor einer Vorrichtung mit definierter Halteposition am Tragring die Behälter an der richtigen Seite haltend zur Verfügung stellen zu können.

Es ist deshalb Aufgabe der vorliegenden Erfindung, ein Verfahren, eine Vorrichtung, sowie eine Klammer zu schaffen, mit der/dem es möglich ist, eine einfachere Handhabung von Behältern, vor allem in Herstellungslinien mit vielen Übergabestationen, zu ermöglichen.

Die Aufgabe wird gelöst bezüglich der Klammer durch die Merkmale des Anspruchs 1, bezüglich des Verfahrens durch die Merkmale des Anspruchs 13 sowie bezüglich der Vorrichtung durch die Merkmale des Anspruchs 14.

Die Erfindung beschäftigt sich mit einer Klammer, einer Vorrichtung sowie einem Verfahren zum Halten von Behältern, wobei unter Behälter jegliche Gefäße mit mindestens einem Mündungsbereich, einem Rumpfbereich und einem Bodenbereich zu verstehen sind, wobei der Mündungsbereich der Behälter mindestens eine Wulst aufweist, die sich zumindest teilweise am Umfang des Behälters radial nach außen erstreckt. Eine solche Wulst kann z.B. ein Tragring für Behälter sein, an dessen Unter- bzw. Oberseite der Behälter ergriffen wird, sie kann aber auch ein Verschlusssicherungsring sein, der in der Regel geringere Dimensionen aufweist als ein Tragring. Unter Wulst sind auch sonstige Erhebungen, wie z.B. Endbereiche von Gewinden oder sonstige nasenartige, sich erhebende Unterstützungsflächen zu verstehen. Dabei ist es unerheblich, ob die Wulst mit oder ohne Unterbrechungen um den Umfang des Behälters angebracht ist. Es ist weiterhin unerheblich, wie viele Wulste der Behälter aufweist.

Die Wulste befinden sich vorzugsweise im Mündungsbereich des Behälters, eine Anordnung im Bereich der Schulter bzw. des Rumpfes ist aber auch denkbar.

Die Klammer weist zumindest zwei die Behälter am Umfang ergreifende Klammerarme auf, die in der Regel so am Behälter anliegen, dass sich die Berührungsflächen bezüglich einer Längsachse der Behälter im Wesentlichen gegenüber befinden. Ein anderes Angreifen der Klammerarme ist auch denkbar, so lange ein sicheres Halten der Behälter gewährleistet ist.

Vorzugsweise sind die Klammerarme so ausgebildet, dass sie aus einem Befestigungsbereich und einem Klemmbereich bestehen, wobei sich der Befestigungsbereich dadurch kennzeichnet, dass er Vorrichtungen zur Befestigung an einem Träger oder einer Halterung.aufweist, während der Klemmbereich zum Klemmen der Behälter vorgesehen ist.

Erfindungsgemäß sind die beiden Befestigungsbereiche der Klammer so angeordnet, dass sie bezüglich einer Längsachse der Behälter höhengleich angeordnet sind. Erst in Richtung der Klemmbereiche stellt sich der Höhenversatz bezüglich der Längsachse der Behälter ein. Dieser Höhenversatz der Klemmbereiche kann auf verschiedenste Arten erzeugt werden. Zum Einen ist es möglich, die beiden Klemmbereiche dünner auszubilden als die Befestigungsbereiche, wobei die Materialeinsparung bezüglich der Befestigungsbereiche bei einem Klammerarm oben und bei dem anderen Klammerarm unten vorgenommen wird.

Der Höhenversatz kann aber auch so erzeugt werden, dass die Klemmbereiche als unabhängige Teile an die Befestigungsbereiche der Klammerarme befestigt werden, wobei bei dem einen Klammerarm der Klemmbereich an der Oberseite des Befestigungsbereichs und bei dem anderen Klammerarm der Klemmbereich an der Unterseite des Befestigungsbereichs befestigt wird.

Eine weitere Möglichkeit besteht darin, die Klemmbereiche der Klammerarme durch eine Raumwindung so anzuordnen, dass ein höhenversetztes Greifen der beiden gegenüberliegenden Klemmbereiche am Behälter möglich ist. Es versteht sich für den Fachmann von selbst, das der Höhenversatz der Klemmbereiche der Klammerarme auf verschiedenste Arten gebildet werden kann, wobei diese drei aufgeführten Möglichkeiten nur exemplarische Ausgestaltungen sind.

Gemäß einer bevorzugten Ausführungsform der Erfindung sind die beiden Klammerarme aktiv steuerbar, wobei diese aktive Steuerung vorzugsweise mittels einer Kurvensteuerung bewerkstelligt wird. Auch hier versteht sich von selbst, dass andere aktive Steuerungen vorstellbar sind.

Es wäre auch denkbar, dass die Klammerarme passiv steuerbar sind.

Die Klammer kann sowohl einteilig als auch zwei- bzw. mehrteilig ausgebildet sein, wobei die bevorzugte Ausführungsform in einer zweiteiligen Ausgestaltung liegt.

Vorzugsweise besteht die Klammer zumindest teilweise aus Kunststoff, wobei aber auch andere Ausgestaltungen insbesondere Metall vorstellbar sind.

Gemäß einer bevorzugten Weiterbildung der Erfindung sind die Klammerarme bezüglich der Längsachse der Behälter so höhenversetzt angeordnet, dass der eine Klemmbereich des Klammerarms unterhalb und der andere Klemmbereich des anderen Klammerarms oberhalb der Wulst angreift. Bei diesem Greifvorgang ist es irrelevant, ob es sich bei der Wulst um den Tragring, um einen Verschlusssicherungsring oder um einen Teil des Gewindes handelt.

Gemäß einer bevorzugten Weiterbildung der Erfindung weist zumindest ein Klammerarm in seinem Klemmbereich eine Unterstützungsfläche auf, die sich in der gleichen Höhe befindet, wie der Klemmbereich des anderen Klammerarms.

Eine bevorzugte Weiterbildung des Verfahrens zum Transportieren von Behältern besteht darin, dass die Behälter einen Übergabebereich durchlaufen, in dem sie von einer ersten Klammer an eine zweite Klammer übergeben werden, wobei sowohl die erste Klammer als auch die zweite Klammer die Behälter oberhalb und unterhalb der Wulst ergreifen. D. h, dass die Klammern so angeordnet sind, dass der eine Klammerarm der ersten Klammer den Behälter bezüglich der Längsachse des Behälters an einer Seite des Tragrings ergreift, während ein anderer Klammerarm der zweiten Klammer den Behälter an der gegenüberliegenden Seite der Wulst ergreift. Dabei spielt es für das Verfahren keinen Rolle, ob die Behälter am Tragring, am Verschlusssicherungsring oder an einer sonstigen Wulst ergriffen werden. Vorteil dieser Ausprägung des Verfahrens ist es, dass sowohl die übergebende als auch die übernehmende Klammer in gleicher Höhe angeordnet werden können, ohne dass sie bei der Übergabe der Behälter kollidieren.

Eine besonders bevorzugte Weiterbildung der Erfindung bezüglich der Vorrichtung besteht darin, dass die Klammern, die die Behälter halten, an einem Transportstern und/oder einer Transportkette befestigt sind. Dadurch sind Übergaben von Transportsternen zu Transportketten oder umgekehrt oder Übergaben von Transportketten zu Transportketten oder Übergaben von Transportsternen zu Transportsternen möglich. Auch weitere Befestigungsmittel sind denkbar, so dass eine möglichst flexible Handhabung der Behälter in einer Behälterbehandlungsanlage möglich ist.

Vorteilhaft ist die Vorrichtung in eine Behälterbehandlungsanlage integriert, die eine Streckblasmaschine und / oder eine Füllmaschine und / oder eine Verschließmaschine und / oder eine Verpackungsmaschine umfasst.

Nachstehend werden Ausführungsbeispiele anhand der Zeichnungen näher beschrieben.

Dabei zeigt:
- Figur 1: eine Draufsicht auf eine Klammer,
- Figur 2: eine isometrische Ansicht einer Klammer,
- Figur 3: eine Frontansicht einer Klammer mit Halterung und Preform,
- Figur 4: eine Seitenansicht einer Übergabe eines Prefroms von einer Klammer zu einer anderen Klammer,
- Figur 5: eine Vergrößerung eines Bereichs der Klammer von Figur 2.

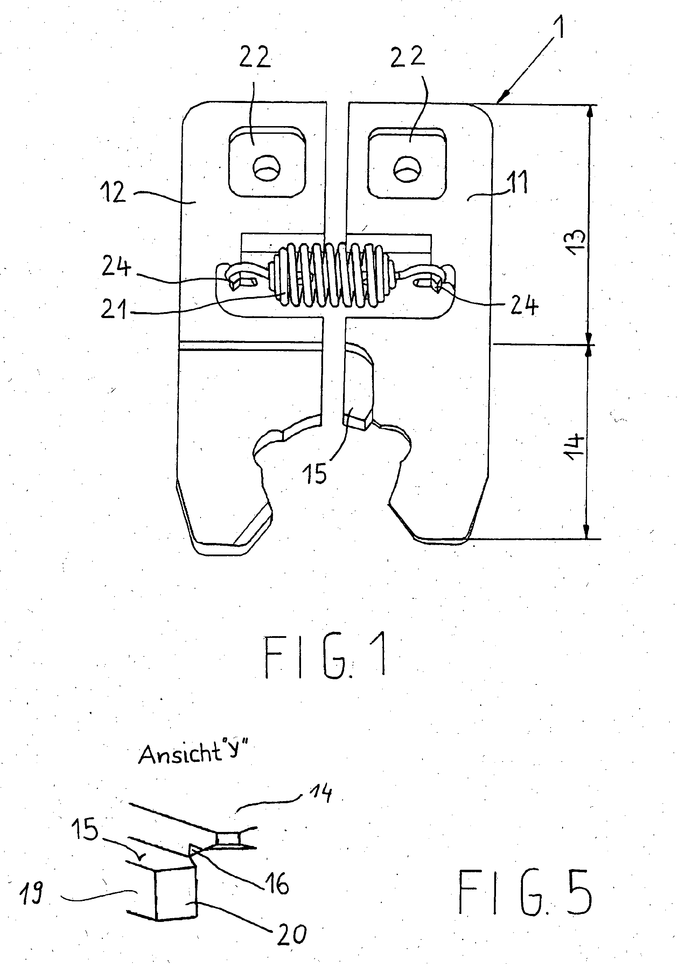

Figur 1 zeigt dabei eine Klammer 1 mit zwei Klammerarmen 11, 12, wobei jeder Klammerarm aus einem Befestigungsbereich 13 und einem Klemmbereich 14 besteht. Des weiteren sind die Klammerarme 11, 12 jeweils mit Aussparungen 22 sowie mit Haken 24 versehen. Die Aussparungen 22 dienen dazu, um an einem Träger 23 befestigt zu werden. Die Haken 24 erfüllen die Funktion eines Halters, an dem jeweils ein Endbereich eines Federelements eingehängt wird, der die beiden Klammerarme 11, 12 durch Federkraft zusammenhält.

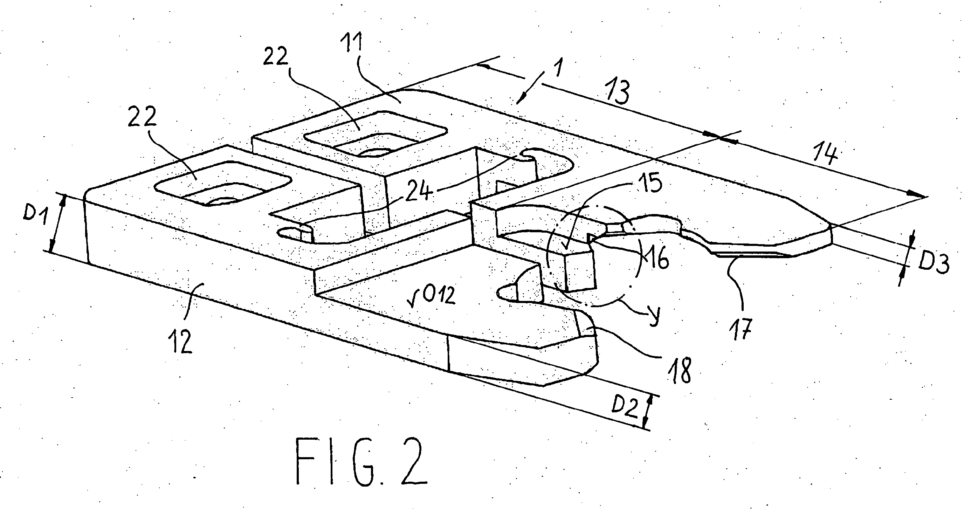

In Figur 2 wird die gleiche Klammer wie in Figur 1 dargestellt, jedoch in anderer Ansicht und ohne Federelement 21. Auch hier sind die beiden Klammerarme 11, 12 mit den jeweiligen Befestigungsbereichen 13, den Klemmbereichen 14, den Aussparungen 22 sowie dem Haken 24 zu sehen. Weiterhin zeigt der Klammerarm 11 eine Einführschräge 17 sowie der Klammerarm 12 eine Einführschräge 18, wodurch ein sauberes Einführen eines Behälters in bzw. an den Klemmbereich ermöglicht wird. In Figur 2 sind die Dickenverhältnisse der Klammer 1 dargestellt. Die Klammerarme 11, 12 weisen in ihrem Befestigungsbereich 13 eine Dicke D1 auf. Die Klemmbereiche 14 der Klammerarme 11, 12 sind jeweils dünner als die Befestigungsbereiche 13, wobei die Dicke D2 des Klemmbereichs 14 des Klammerarms 12 größer ist als die Dicke D3 des Klemmbereichs 14 des Klammerarms 11. Der Klammerarm 11 weist eine Unterstützungsfläche 15 auf, die in der gleichen Ebene angeordnet ist, wie die Oberfläche O12 des Klemmbereichs 14 des Klammerarms 12. Der Unterstützungsblock 19 hat die gleiche Dicke D2 wie der Klemmbereich 14 des Klammerarms 12. Vom Unterstützungsblock 19 in Richtung einer Längsachse A an der Seite zum Klemmbereich 14 des Klammerarms 11 erstreckt sich ein Absatz 16, wobei die Höhe des Absatzes in etwa der Höhe der zu ergreifenden Wulst entspricht.

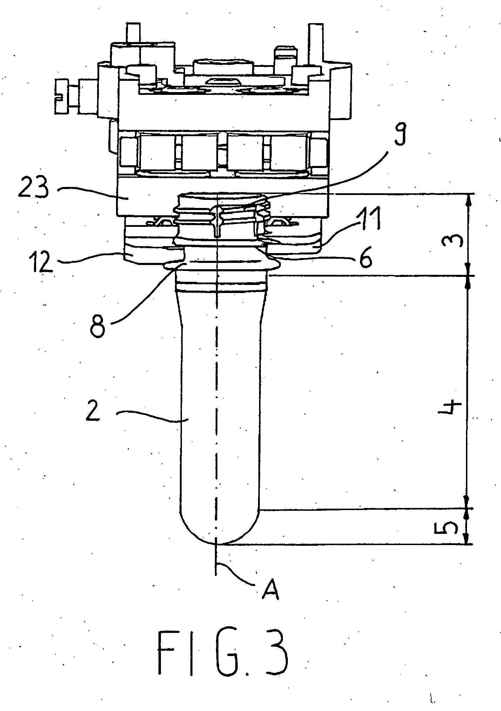

Figur 3 zeigt einen Behälter 2, der in einer Klammer 1 gehalten wird. Der Behälter weist einen Mündungsbereiche 3 einen Rumpfbereich 4 sowie einen Bodenbereich 5 auf. In dem Mündungsbereich 3 befindet sich ein Gewinde 9, eine Wulst 6 sowie ein Tragring 8. Es ist hier deutlich zu sehen, dass der Klemmbereich 14 des Klammerarms 11 oberhalb der Wulst 6 und der Klemmbereich 14 des Klammerarms 12 unterhalb der Wulst 6 des Behälters 2 angreift.

Die Klammerarme 11, 12 sind mit ihren Aussparungen 22, die hier nicht zu sehen sind, an dem Träger 23 befestigt. Der Träger 23 seinerseits ist an einer hier nicht gezeigten Vorrichtung wie z. B. einem Transportstern oder einer Kette befestigt.

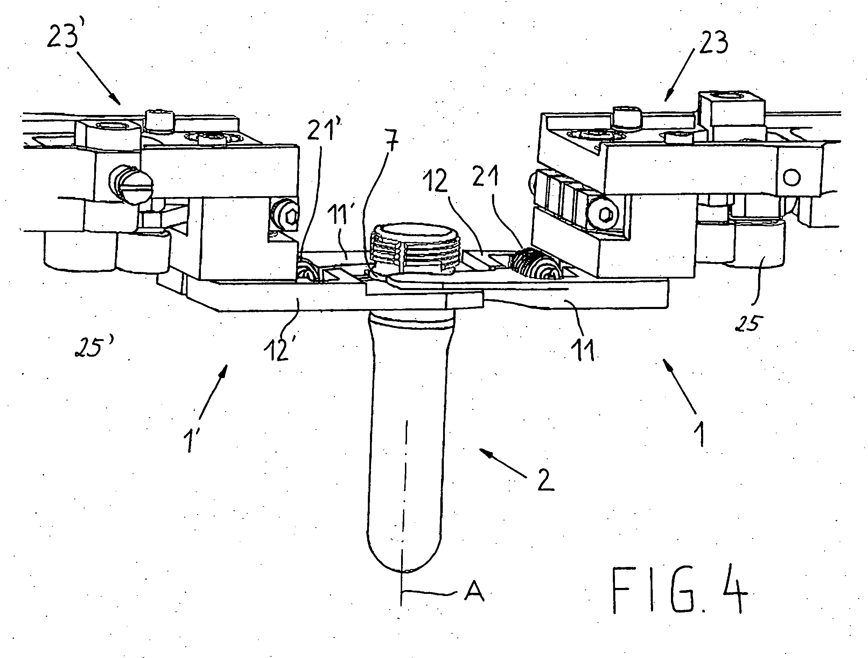

Figur 4 zeigt die Übergabe eines Behälters 2 von einer Klammer 1 zu einer anderen Klammer 1'. Der Behälter 2 weist sowohl einen Verschlusssicherungsring 7 als auch einen hier nicht sichtbaren Tragring 8 auf, wobei der Behälter 2 von den Klammern 1 und 1' oberhalb des Tragrings 8 und oberhalb und unterhalb des Verschlusssicherungsringes 7 gehalten wird. Der Klammerarm 11 der Klammer 1 ergreift den Behälter 2 an der Oberseite des Verschlusssicherungsringes 7, während der Klammerarm 12' der Klammer 1' den Behälter 2 unterhalb des selben ergreift. Der Klammerarm 11' der Klammer 1' ergreift den Behälter 2 an der Oberseite des Verschlusssicherungsrings 7 jedoch auf der dem Betrachter hier abgewandten Seite des Behälters 2. Der Klammerarm 12 der Klammer 1 ergreift den Behälter 2 ebenso wie der Klammerarm 12' der Klammer 1' auf der Unterseite des Verschlusssicherungsringes 7, jedoch wiederum der dem Betrachter abgewandten Seite des Behälters 2.

Die Klammerarme 11, 12 und 11' , 12' der Klammern 1 und 1' werden jeweils durch ein Federelement 21 und 21' mit Kraft beaufschlagt, so dass sich die Klemmbereiche 14 der Klammerarme 11 und 12 sowie 11' und 12' aufeinander zu bewegen. Die Klammern 1 und 1' sind mit hier nicht gezeigten Befestigungsmitteln an den Trägern 23 und 23' befestigt.

Die Träger 23 und 23' weisen Steuerrollen 25 und 25' auf, die mit einer hier nicht gezeigten Kurve in Eingriff stehen, um die Klammern 1 und 1' aktiv zu steuern.

Figur 5 zeigt eine vergrößerte Darstellung des Klemmbereichs 14 des Klammerarms 11 aus Figur 2. Es ist der Unterstützungsblock 19 mit seiner Unterstützungsfläche 15 näher zu sehen, die im Falle des Haltens eines Behälters 2 an der Unterseite der Wulst 6 anliegt. Die Zentrierfläche 20 liegt zumindest teilweise am Umfang des Behälters 2 an. Der Klemmbereich 14 der Klammer 11 weist dabei einen schon beschriebenen Absatz 16 auf, dessen Höhe in etwa der Dicke der Wulst 6 des Behälters 2 entspricht. Die Klammer 1, 1' ist dabei so dimensioniert, dass die Dicke D1 der Klammer 1, 1' in etwa der Summe der Dicke D2, D3 sowie der Höhe des Absatzes 16 entspricht.

Bevorzugt ist der Behälter durch die beiden Klammerarme (11, 11', 12, 12') kraftschlüssig erfassbar. Dabei wird besonders bevorzugt die kraftschlüssige Erfassung durch ein Federelement (21) zwischen den Klammerarme (11, 11', 12, 12') bewerkstelligt. Es wäre jedoch auch möglich, dass die kraftschlüssige Erfassung der Behälter (2) durch je mindestens einen Magneten im Klammerarm (11, 11', 12, 12') hergestellt wird.

Weiterhin wäre es auch möglich, dass die Klammerarme passiv steuerbar sind.

Die Erfindung ist, wie gesagt, auch auf ein Verfahren von in einem Mündungsbereich (3) mindestens eine Wulst (6, 7, 8) aufweisenden Behältern (2) gerichtet, wobei die Behälter (2) im Mündungsbereich (3) von Klammern (1) mit zwei Klammerarmen (11, 11', 12, 12') gehalten werden, wobei erfindungsgemäß der eine Klammerarm (11) am Behälter (2) oberhalb der Wulst (6, 7, 8) angreift, während der andere Klammerarm (12) am Behälter (2) unterhalb der Wulst (6, 7, 8) angreift.

Vorzugsweise werden die Behälter (2) von Klammern (1) nach der oben beschriebenen Art ergriffen. Bevorzugt durchlaufen die Behälter (2) einen Übergabebereich, in dem sie von einer ersten Klammer (1, 1') an eine zweite Klammer (1') übergeben werden, wobei sowohl die erste Klammer (1, 1') als auch die zweite Klammer (1') die Behälter (2) oberhalb und unterhalb der Wulst (6, 7, 8) ergreift.

Dabei ist bevorzugt der zweite Klammerarm (12') der zweiten Klammer (1') so angeordnet ist, dass er die Behälter (2) in Richtung ihrer Längsachse (A) auf der gegenüberliegenden Seite der Wulst (6, 7, 8) ergreift, wie der erste Klammerarm (11) der ersten Klammer (1, 1').

Vorzugsweise ist der erste Klammerarm (11') der zweiten Klammer (1') so angeordnet, dass er die Behälter (2) in Richtung ihrer Längsachse (A) auf der gegenüberliegenden Seite der Wulst (6, 7, 8) ergreift, wie der zweite Klammerarm (12) der ersten Klammer (1, 1').

Bevorzugt ergreifen die Klammerarme (11, 11', 12, 12') die Behälter (2) oberhalb und unterhalb eines Verschlusssicherungsringes (7).

Bei einem weiteren bevorzugten Verfahren ergreifen die Klammerarme (11, 11', 12, 12') die Behälter (2) oberhalb und unterhalb eines Tragringes (8).

Vorteilhaft weisen die Behälter (2) mindestens einen Tragring (8) und mindestens einen Verschlusssicherungsring (7) auf, wobei die Klammern (1, 1') während des gesamten Transportvorgangs oberhalb des Tragrings (8) angreifen.

## Patentansprüche

1. Klammer (1, 1') zum Halten von Behältern (2) mit mindestens einem Mündungsbereich (3), einem Rumpfbereich (4) und einem Bodenbereich (5), wobei die Klammer (1, 1') zumindest zwei Klammerarme (11, 11', 12, 12') aufweist, die den Behälter (2) an dessen Umfang im Mündungsbereich (3) erfassen, wobei die Klammerarme (11, 11', 12, 12') bezüglich einer Längsachse (A) der Behälter (2) zumindest teilweise höhenversetzt angeordnet sind, **dadurch gekennzeichnet, dass** die Klammerarme (11, 11', 12, 12') aus je einem Befestigungsbereich (13) und einem Klemmbereich (14) bestehen, wobei die beiden Befestigungsbereiche (13) bezüglich der Längsachse (A) der Behälter (2) höhengleich, während die Klemmbereiche (14) höhenversetzt angeordnet sind.

2. Klammer (1, 1') nach Anspruch 1, **dadurch gekennzeichnet, dass** zumindest ein Klammerarm (11, 11', 12, 12') aus einem Befestigungsbereich (13) und einem Klemmbereich (14) besteht, wobei der Klemmbereich (14) zumindest teilweise am Umfang des zu haltenden Behälters (2) anliegt.

3. Klammer (1, 1') nach wenigstens einem der Ansprüche 1 bis 2, **dadurch gekennzeichnet, dass** die Klemmbereiche (14) unterschiedliche Dicken aufweisen.

4. Klammer (1, 1') nach Anspruch 3, **dadurch gekennzeichnet, dass** der Klemmbereich (14) des Klammerarms (11) eine Dicke (D3) von 1mm bis 5mm und der Klemmbereich (14) des Klammerarms (12) eine Dicke (D2) von 3mm bis 8mm aufweist.

5. Klammer (1, 1') nach wenigstens einem der Ansprüche 1 bis 4, **dadurch gekennzeichnet, dass** die Klammerarme (11, 11', 12, 12') so ausgebildet sind, dass der Behälter (2) im Mündungsbereich (3) bezüglich dessen Umfang an zwei sich im Wesentlichen gegenüberliegenden Seiten ergreifbar ist.

6. Klammer (1, 1') nach weinigstens einem der Ansprüche 1 bis 5, **dadurch gekennzeichnet, dass** der Höhenversatz derart ausgebildet ist, dass der Behälter (2) im Mündungsbereich (3) von dem einen Klammerarm (11) oberhalb und von dem anderen Klammerarme (12) unterhalb einer Wulst (6, 7, 8) gehalten wird.

7. Klammer (1, 1') nach Anspruch 6, **dadurch gekennzeichnet, dass** der Befestigungsbereich (13) der Klammern (1, 1') eine Dicke (D1) aufweist, die der Summe der Dicke (D2) des Klemmbereichs (14) des Klammerarms (12, 12'), der Dicke (D3) des Klemmbereichs (14) des Klammerarms (11, 11') und der Dicke (D4) der Wulst (6, 7, 8) im Wesentlichen entspricht.

8. Klammer (1, 1') nach wenigstens einem der Ansprüche 1 bis 7, **dadurch gekennzeichnet, dass** die Befestigungsbereiche (13) der Klammerarme (11, 11', 12, 12') Aussparungen (22) zur Befestigung an Trägern (23) aufweisen.

9. Klammer (1, 1') nach wenigstens einem der Ansprüche 7 bis 8, **dadurch gekennzeichnet, dass** die Klammerarme (11, 11', 12, 12') Ausnehmungen in Form von Haken (24) aufweisen, um Endbereiche von Federelementen (21) aufzunehmen.

10. Klammer (1, 1') nach wenigstens einem der Ansprüche 1 bis 9, **dadurch gekennzeichnet, dass** der Klammerarm (11, 11') eine Unterstützungsfläche (15) aufweist, die sich in der gleichen Ebene befindet, wie die Oberfläche (O12) des Klemmbereichs (14) des Klammerarme (12, 12').

11. Klammer (1, 1') nach wenigstens einem der Ansprüche 1 bis 10, **dadurch gekennzeichnet, dass** die Unterstützungsfläche (15) direkt an den Klemmbereich (14) des Klammerarms (11, 11') grenzt und dass der Klammerarm (11, 11') hier einen Absatz (16) aufweist.

12. Klammer (1, 1') nach wenigstens einem der Ansprüche 1 bis 11, **dadurch gekennzeichnet, dass** der Absatz (16) in Richtung der Längsachse (A) der Behälter (2) eine Höhe aufweist, die in etwa der Dicke (D4) der Wulst (6, 7, 8) entspricht.

13. Verfahren zum Transportieren von in einem Mündungsbereich (3) mindestens eine Wulst (6, 7, 8) aufweisenden Behältern (2), wobei die Behälter (2) im Mündungsbereich (3) von Klammern (1) mit zwei Klammerarmen (11, 11', 12, 12') gehalten werden, wobei der eine Klammerarme (11) am Behälter (2) oberhalb der Wulst (6, 7, 8) angreift, während der andere Klammerarm (12) am Behälter (2) unterhalb der Wulst (6, 7, 8) angreift, **dadurch gekennzeichnet, dass** die Klammerarme (11, 11', 12, 12') aus je einem Befestigungsbereich (13) und einem Klemmbereich (14) bestehen, wobei die beiden Befestigungsbereiche (13) bezüglich der Längsachse (A) der Behälter (2) höhengleich, während die Klemmbereiche (14) höhenversetzt angeordnet sind.

14. Vorrichtung zum Transportieren von Behältern (2) mit Klammern (1, 1'), wobei die Behälter (2) mindestens einem Mündungsbereich (3), einem Rumpfbereich (4) und einem Bodenbereich (5) und der Mündungsbereich (3) mindestens eine Wulst (6, 7, 8) aufweist, **dadurch gekennzeichnet, dass** die Behälter (2) im Mündungsbereich (3) von Klammern (1, 1') nach wenigstens einem der Ansprüche 1 bis 12 ergreifbar sind.

## Claims

1. A clamp (1, 1') for the holding of containers (2) with at least one aperture region (3), a body region (4) and a base region (5), wherein the clamp (1, 1') has at least two clamp arms (11, 11', 12, 12') which grasp the container (2) on the periphery thereof in the aperture region (3), wherein the clamp arms (11, 11', 12, 12') are arranged offset vertically at least in part with respect to a longitudinal axis (A) of the containers (2), **characterized in that** the clamp arms (11, 11', 12, 12') comprise one fastening region (13) and one clamping region (14) in each case, wherein the two fastening regions (13) are arranged at the same vertical level with respect to the longitudinal axis (A) of the containers (2), whilst the clamping regions (14) are arranged offset vertically.

2. A clamp (1, 1') according to claim 1, **characterized in that** at least one clamp arm (11, 11', 12, 12') comprises at least one fastening region (13) and one clamping region (14), wherein the clamping region (14) rests at least in part on the periphery of the container (2) to be held.

3. A clamp (1, 1') according to at least one of claims 1 to 2, **characterized in that** the clamping regions (14) have different thicknesses.

4. A clamp (1, 1') according to claim 3, **characterized in that** the clamping region (14) of the clamp arm (11) has a thickness (D3) of from 1 mm to 5 mm and the clamping region (14) of the clamp arm (12) has a thickness (D2) of from 3 mm to 8 mm.

5. A clamp (1, 1') according to at least one of claims 1 to 4, **characterized in that** the clamp arms (11, 11', 12, 12') are designed in such a way that the container (2) is capable of being gripped in the aperture region (3) with respect to the periphery thereof on two sides which are substantially opposite each other.

6. A clamp (1, 1') according to at least one of claims 1 to 5, **characterized in that** the vertical offset is formed in such a way that the container (2) is held in the aperture region (3) above a bulge (6, 7, 8) by one clamp arm (11) and below a bulge (6, 7, 8) by the other clamp arm (12).

7. A clamp (1, 1') according to claim 6, **characterized in that** the fastening region (13) of the clamps (1, 1') have a thickness (D1) which substantially corresponds to the sum of the thickness (D2) of the clamping region (14) of the clamp arm (12, 12'), the thickness (D3) of the clamping region (14) of the clamp arm (11, 11') and the thickness (D4) of the bulge (6, 7, 8).

8. A clamp (1, 1') according to at least one of claims 1 to 7, **characterized in that** the fastening regions (13) of the clamp arms (11, 11', 12, 12') have recesses (22) for fastening to carriers (23).

9. A clamp (1, 1') according to at least one of claims 7 to 8, **characterized in that** the clamp arms (11, 11', 12, 12') have recesses in the form of hooks (24) in order to receive end regions of spring elements (21).

10. A clamp (1, 1') according to at least one of claims 1 to 9, **characterized in that** the clamp arm (11, 11') has a support face (15) which is situated in the same plane as the surface (012) of the clamping region (14) of the clamp arm (12, 12').

11. A clamp (1, 1') according to at least one of claims 1 to 10, **characterized in that** the support face (15) is directly adjacent to the clamping region (14) of the clamp arm (11, 11') and the clamp arm (11, 11') has an offset (16) here.

12. A clamp (1, 1') according to at least one of claims 1 to 11, **characterized in that** in the direction of the longitudinal axis (A) of the containers (2) the offset (16) has a height which corresponds substantially to the thickness (D4) of the bulge (6, 7, 8).

13. A method of conveying containers (2) having at least one bulge (6, 7, 8) in an aperture region (3), wherein the containers (2) are held in the aperture region (3) by clamps (1) with two clamp arms (11, 11', 12, 12'), wherein one clamp arm (11) engages on the container (2) above the bulge (6, 7, 8), whilst the other clamp arm (12) engages on the container (2) below the bulge (6, 7, 8), **characterized in that** the clamp arms (11, 11', 12, 12') comprise one fastening region (13) and one clamping region (14) in each case, wherein the two fastening regions (13) are arranged at the same vertical level with respect to the longitudinal axis (A) of the containers (2), whilst the clamping regions (14) are arranged offset vertically.

14. An apparatus for the conveying of containers (2) with clamps (1, 1'), wherein the containers (2) have at least one aperture region (3), a body region (4) and a base region (5), and the aperture region (3) has at least one bulge (6, 7, 8), **characterized in that** the containers (2) are capable of being gripped in the aperture region (3) by clamps (1, 1') according to at least one of claims 1 to 12.

## Revendications

1. Pince (1, 1') pour le maintien de récipients (2) présentant au moins une zone d'embouchure (3), une zone de corps (4) et une zone de fond (5), ladite pince (1, 1') comportant au moins deux bras de pince (11, 11', 12, 12') qui saisissent le récipient (2) sur son pourtour dans la zone d'embouchure (3), lesdits bras de pince (11, 11', 12, 12') étant au moins partiellement décalés en hauteur par rapport à un axe longitudinal (A) des récipients (2), **caractérisée en ce que** lesdits bras de pince (11, 11', 12, 12') sont constitués chacun d'une zone de fixation (13) et d'une zone de serrage (14), les deux zones de fixation (13) étant situées à la même hauteur par rapport à l'axe longitudinal (A) des récipients (2), alors que les zones de serrage (14) sont décalées en hauteur.

2. Pince (1, 1') selon la revendication 1, **caractérisée en ce qu'**au moins un bras de pince (11, 11', 12, 12') est constitué d'une zone de fixation (13) et d'une zone de serrage (14), la zone de serrage (14) étant au moins partiellement appliquée sur le pourtour du récipient (2) à maintenir.

3. Pince (1, 1') selon au moins une des revendications 1 à 2, **caractérisée en ce que** les zones de serrage (14) ont des épaisseurs différentes.

4. Pince (1, 1') selon la revendication 3, **caractérisée en ce que** la zone de serrage (14) du bras de pince (11) a une épaisseur (D3) comprise entre 1 mm et 5 mm, et la zone de serrage (14) du bras de pince (12) une épaisseur (D2) comprise entre 3 mm et 8 mm.

5. Pince (1, 1') selon au moins une des revendications 1 à 4, **caractérisée en ce que** les bras de pince (11, 11', 12, 12') sont réalisés de telle manière que le récipient (2) puisse être saisi dans la zone d'embouchure (3) sur deux côtés sensiblement opposés de son pourtour.

6. Pince (1, 1') selon au moins une des revendications 1 à 5, **caractérisée en ce que** le décalage en hauteur est prévu de telle manière que le récipient (2) soit maintenu dans la zone d'embouchure (3) par un bras de pince (11) au-dessus d'un boudin (6, 7, 8), et par l'autre bras de pince (12) au dessous dudit boudin.

7. Pince (1, 1') selon la revendication 6, **caractérisée en ce que** la zone de fixation (13) des pinces (1, 1') a une épaisseur (D1) qui correspond sensiblement au total de l'épaisseur (D2) de la zone de serrage (14) du bras de pince (12, 12'), de l'épaisseur (D3) de la zone de serrage (14) du bras de pince (11, 11') ') et de l'épaisseur (D4) du boudin (6, 7, 8).

8. Pince (1, 1') selon au moins une des revendications 1 à 7, **caractérisée en ce que** les zones de fixation (13) des bras de pince (11, 11', 12, 12') présentent des évidements (22) pour la fixation sur des supports (23).

9. Pince (1, 1') selon au moins une des revendications 7 et 8, **caractérisée en ce que** les bras de pince (11, 11', 12, 12') présentent des évidements en forme de crochets (24) pour recevoir des parties d'extrémité d'éléments de ressort (21).

10. Pince (1, 1') selon au moins une des revendications 1 à 9, **caractérisée en ce que** le bras de pince (11, 11') présente une surface d'appui (15) située sur le même plan que la surface (012) de la zone de serrage (14) du bras de pince (12, 12').

11. Pince (1, 1') selon au moins une des revendications 1 à 10, **caractérisée en ce que** la surface d'appui (15) est directement adjacente à la zone de serrage (14) du bras de pince (11, 11'), et **en ce que** le bras de pince (11, 11') y présente un épaulement (16).

12. Pince (1, 1') selon au moins une des revendications 1 à 11, **caractérisée en ce que** l'épaulement (16) présente dans la direction de l'axe longitudinal (A) des récipients (2) une hauteur qui correspond sensiblement à l'épaisseur (D4) du boudin (6, 7, 8).

13. Procédé de transport de récipients (2) présentant au moins un boudin (6, 7, 8) dans une zone d'embouchure (3), dans lequel les récipients (2) sont maintenus dans la zone d'embouchure (3) par des pinces (1) à deux bras de pince (11, 11', 12, 12'), un bras de pince (11) saisissant le récipient (2) au-dessus d'un boudin (6, 7, 8), et l'autre bras de pince (12) saisissant le récipient (2) au dessous du boudin (6, 7, 8), **caractérisé en ce que** les bras de pince (11, 11', 12, 12') sont constitués chacun d'une zone de fixation (13) et d'une zone de serrage (14), les deux zones de fixation (13) étant situées à la même hauteur par rapport à l'axe longitudinal (A) des récipients (2), alors que les zones de serrage (14) sont décalées en hauteur.

14. Dispositif pour le transport de récipients (2) au moyen de pinces (1, 1'), lesdits récipients (2) présentant au moins une zone d'embouchure (3), une zone de corps (4) et une zone de fond (5), et la zone d'embouchure (3) présentant au moins un boudin (6, 7, 8), **caractérisé en ce que** les récipients (2) peuvent être saisis dans la zone d'embouchure (3) par des pinces (1, 1') selon au moins une des revendications 1 à 12.
